# EUROPEAN PATENT APPLICATION

(11) **EP 4 393 364 A1**
(43) Date of publication of application: **03.07.2024**
(21) Application number: 22861608.2
(22) Date of filing: 11.08.2022
(51) Int. Cl.: A47J 47/01, A47J 43/04, A23L 27/00

(54) **SAUCE SUPPLYING APPARATUS AND EDIBLE PRODUCT MANUFACTURING SYSTEM INCLUDING SAME**

(30) Priority: 24.08.2021 KR 20210111980
(71) Applicant: CJ CheilJedang Corporation, Seoul 04560 (KR)
(72) Inventor: HWANG, Jai Mun, Seoul 04560 (KR); JUNG, Tae Hyun, Seoul 04560 (KR); KWAK, Dong Ju, Seoul 04560 (KR); LEE, Jun Seok, Seoul 04560 (KR); CHOI, So Jeong, Seoul 04560 (KR); JEONG, Jee Hwan, Seoul 04560 (KR); LEE, Ga Yeong, Seoul 04560 (KR)
(74) Representative: Bandpay & Greuter
(86) International application number: PCT/KR2022/012048
(87) International publication number: WO 2023/027398

(57) **Abstract**

The present invention relates to a sauce supplying apparatus and an edible product manufacturing system including the same, and the sauce supplying apparatus may comprise: a sauce input part provided to allow input of a sauce; a sauce discharging part connected to the sauce input part, extending downward, and provided to drop the sauce input by the sauce input part downwards and discharge the same; and a discharge diffusion applying part connected to the lower side of the sauce discharging part and provided to assist discharging of the sauce through the sauce discharging part.

## Description

### [Technical Field]

The present disclosure relates to a seasoning supply apparatus, and an edible product production system including the same.

### [Background Art]

A process of processing a given ingredient is required to produce food, and this processing may include not only washing or trimming ingredients, but also adding seasoning including other ingredients. Seasoning may be applied to the ingredients, and here, application may include bringing the seasoning into contact with surfaces of the ingredients as well as spreading the seasoning on an inside of the ingredients. In general, salting foods may be made in this way. Pickled foods are foods, a storability of which is improved by adding salt, and include kimchi, pickled radish, pickled vegetables, and cucumber kimchi, and among them, kimchi, especially bunch kimchi is a representative example.

When bunch kimchi is made, whole cabbages wrapped in several layers of leaves may be cut and pickled in brine, seasoning may be applied, and then they may be aged. Seasoning used in making bunch kimchi may be kimchi filling including radish greens, red pepper powder, minced garlic, salted shrimp, and the like.

With the kimchi filling contained in a large-capacity storage tank, seasoning is generally applied by an operator who grasps the pickled cabbage one by one near the storage tank and scoops up an appropriate amount of the kimchi filling. However, when this method is used, the operator picks up the kimchi filling with his or her eyes and applies it to the pickled cabbage, and thus there is a large difference between operators in the appropriate amount of seasoning, and it is not guaranteed that even the same operator will apply a uniform amount of seasoning. Because the entire process of applying the seasoning is done by the operator, each operator has to spend a very long time to produce one product to evenly apply the seasoning to the bunch kimchi, and thus a productivity of the overall product production process deteriorates.

### [Disclosure]

### [Technical Problem]

An aspect of the present disclosure provides a seasoning supply apparatus that may conveniently supply seasoning to edible products while improving the productivity of edible products, and an edible product production system.

### [Technical Solution]

According to an aspect of the present disclosure, a seasoning supply apparatus includes a seasoning introduction part that introduces seasoning, a seasoning discharge connected to the seasoning introduction part, extending downward, and configured such that the seasoning introduced by the seasoning introduction part drops downward and is discharged, and a discharge/spreading/application part connected to a lower side of the seasoning discharge part, and that assists discharge of the seasoning through the seasoning discharge part.

In another embodiment, the discharge/spreading/application part may include a first pipeline member connected to a lower end of the seasoning discharge part, and extending downward, and a compressor that spreads the seasoning with compressed air by supplying the compressed air to an interior of the first pipeline member.

In another embodiment, the compressor may include an air supply member that supplies the compressed air, an air purifying member that purifies air discharged from the air supply member, a pressure control member that control a pressure of the air discharged from the air supply member, and a valve member that selectively discharges the air discharged from the pressure control member.

In another embodiment, the discharge/spreading/application part may include a first pipeline member connected to a lower end of the seasoning discharge part, and extending downward, a second pipeline member, a lower end of which is connected to the first pipeline member, and extending in a direction being inclined a downward direction, and a fan connected to an upper end of the second pipeline member, and that presses the seasoning downward by supplying air into an interior of the seasoning discharge part.

In another embodiment, the discharge/spreading/application part may further include a hose member connecting the second pipeline member and the fan.

In another embodiment, a pair of second pipeline members may extend in different directions each other, and a pair of fans may be provided, and may be connected to upper distal ends of the pair of second pipeline members, respectively.

In another embodiment, the seasoning supply apparatus may further include a vane including a vane body connected to a lower distal end of the discharge/spreading/application part, and a blade protruding toward an inside of the vane body to spread the clumped seasoning passing through the discharge/spreading/application part and dropping by an own weight thereof.

In another embodiment, the discharge/spreading/application part may include branched pipeline member extending downward, and divided into multiple branches to extend.

In another embodiment, the discharge/spreading/application part may include a nozzle member connected to a lower distal end of the discharge/spreading/application part, opened downward, having an area, an opened width of which decreases as it goes to a center thereof.

According to an aspect of the present disclosure, an edible product production system includes a seasoning supply apparatus that forms a semi-finished product by supplying seasoning to a raw material, and a seasoning applying apparatus that forms a product by applying the seasoning to the semi-finished product, and the seasoning supply apparatus includes a seasoning discharge part connected to a seasoning introduction part that introduces the seasoning, and extending downward, and that discharges the seasoning toward the raw material by dropping the seasoning downward, and a discharge/spreading/application part connected to the seasoning discharge part, and that assists discharge of the seasoning through the seasoning discharge part.

### [Advantageous Effects]

According to the present disclosure, seasoning may be conveniently supplied to an edible product through the discharge/spreading/application part that assists the discharge of seasoning whereby the productivity of edible products may be improved and it becomes easier to uniformly apply the seasoning to edible product.

### [Description of Drawings]

FIG. 1 is a conceptual view of an edible product production system according to an embodiment of the present disclosure.
FIG. 2 is a conceptual view of a seasoning supply apparatus according to a first embodiment of the present disclosure.
FIG. 3 is a conceptual view of a seasoning supply apparatus according to a first embodiment of the present disclosure, viewed from another direction.
FIG. 4 is a view illustrating a first pipeline member and a compressor of a seasoning supply apparatus according to a first embodiment of the present disclosure.
FIG. 5 is a view from an example of a vane of a seasoning supply apparatus according to a first embodiment of the present disclosure, viewed from a bottom.
FIG. 6 is a conceptual view of a seasoning supply apparatus according to a second embodiment of the present disclosure.
FIG. 7 is a conceptual view of a seasoning applying apparatus according to an embodiment of the present disclosure.

### [Mode for Invention]

This application claims the benefit of priority to Korean Patent Application No. 10-2021-0111980, filed in the Korean Intellectual Property Office on August 24, 2021, the entire contents of which are incorporated herein by reference.

Hereinafter, embodiments of the present disclosure will be described in detail with reference to the accompanying drawings. In adding reference numerals to the components of the drawings, it is noted that the same components are denoted by the same reference numerals even when they are drawn in different drawings. Furthermore, in describing the embodiments of the present disclosure, when it is determined that a detailed description of related known configurations and functions may hinder understanding of the embodiments of the present disclosure, a detailed description thereof will be omitted.

### <Edible Product Production System>

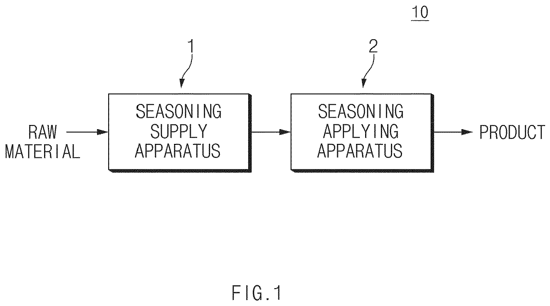

FIG. 1 is a conceptual view of an edible product production system according to an embodiment of the present disclosure.

As illustrated in FIG. 1, an edible product production system 10 according to an embodiment of the present disclosure includes a seasoning supply apparatus 1 and a seasoning applying apparatus 2. A raw material is introduced into the seasoning supply apparatus 1, and seasoning is supplied to the raw material from the seasoning supply apparatus 1 to form a semi-finished product "M" that is the raw material, on which the seasoning is applied, and the semi-finished product "M" is delivered to the seasoning applying apparatus 2, and thus, through the application of seasoning to the semi-finished product "M", a product "P" that is the raw material, on which the seasoning is secondarily applied more uniformly, is formed and discharged. In the specification of the present disclosure, it is assumed in a description thereof that the raw material is pickled cabbage and the product "P" is bunch kimchi, but the kinds of the raw material and the product "P" that may be produced from the raw material are not limited thereto. Furthermore, here, the seasoning may be supplied through injection, but the present disclosure is not limited thereto.
a direction of an overall process of introducing the raw material, discharging the product "P", and delivering the semi-finished product "M" will be referred to as a reference direction. The seasoning supply apparatus 1 and the seasoning applying apparatus 2 may be arranged along the reference direction. The reference direction may be a direction on a straight line, but may not draw a straight line. In an embodiment of the present disclosure, the reference direction is assumed to be a forward direction, but the direction is not limited thereto. Furthermore, in the specification of the present disclosure, a forward direction, a rearward direction, a leftward direction, a rightward direction, an upward direction, a downward direction are expressions used for convenience of description, and may be relatively determined depending on directions, in which the edible product production system 10 and the components are disposed.

According to the edible product production system of the present disclosure, the seasoning may be automatically supplied to the raw material through the seasoning supply apparatus 1, and then, the seasoning may be applied to the semi-finished product through the seasoning applying apparatus 2 to complete the product whereby productivity may be secured. Hereinafter, the seasoning supply apparatus 1 that may automatically supply the seasoning to the raw material will be described in detail.

### <Seasoning Supply Apparatus>

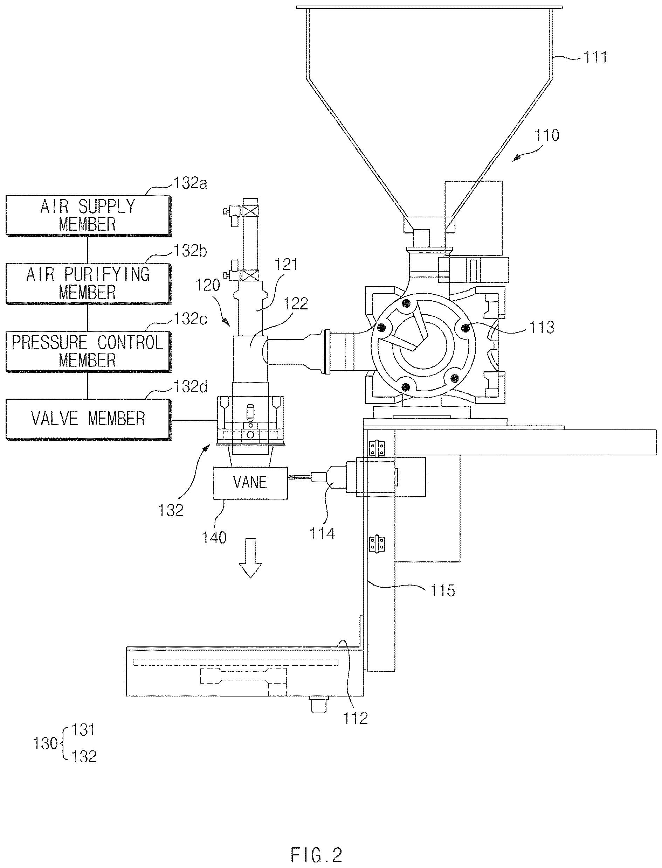

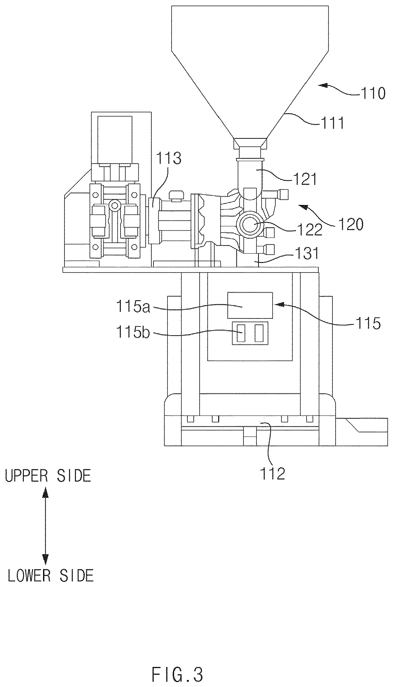

Hereinafter, the seasoning supply apparatuses according to first to third embodiments of the present disclosure will be described in detail with reference to the drawings. FIG. 2 is a conceptual view of the seasoning supply apparatus 1 according to the first embodiment of the present disclosure. FIG. 3 is a conceptual view of the seasoning supply apparatus according to a first embodiment of the present disclosure, viewed from another direction.

### <First Embodiment>

As illustrated in FIG. 2, the seasoning supply apparatus according to the first embodiment of the present disclosure includes a seasoning introduction part 110, a seasoning discharge part 120, and a discharge/spreading/application part 130. The seasoning introduction part 110 may be configured to introduce the seasoning. The seasoning discharge part 120 may be connected to the seasoning introduction part 110 and may extend downward. The seasoning discharge part 120 may be configured to discharge the seasoning that is introduced into the seasoning introduction part 110 by dropping it downward. The discharge/spreading/application part 130 may be connected to a lower side of the seasoning discharge part 120, and may be configured to assist discharge of the seasoning through the seasoning discharge part 120.

Here, assisting the discharge of the seasoning may mean various processes that make the discharge of the seasoning smoother. For example, there may be methods, such as weakening a degree of clumping of the seasoning to facilitate discharge, pushing it through air, or shaking it to facilitate the discharge, but the present disclosure is not limited to the contents described.

### Seasoning Introduction Part 110

As illustrated in FIG. 2, the seasoning introduction part 110 may include a hopper 111. The hopper 111 may be formed in a funnel shape, a cross-sectional area of which decreases as it gores downward, and thus, may collect the seasoning and discharge it downward. The seasoning may be temporarily stored in the hopper 111 and then, may be discharged to a workbench 112 by a pump 113 that will be described later.

The seasoning introduction part 110 may include the pump 113. The pump 113 may extrude the seasoning that drops from the hopper 111 with an own weight thereof. The pump 113 may include two extruders that are engaged with each other to be rotated. The extruders are rotated in the same axial direction, but may be disposed to be spaced apart from each other to be engaged with each other to be rotated.

The pump 113 may be operated by receiving electric power. The pump 113 may be electrically connected to the processor to be controlled. The pump 113 may receive electric power from the processor, but may also receive electric power from a separate power source. The processor may control the pump 113 to extrude the seasoning at a specific supply rate of the seasoning. To extrude a specific amount of the seasoning, a storage medium may include a mapping table that corresponds to an rpm of the extruder and a discharge rate of seasoning. Accordingly, when the supply rate of the seasoning is determined by the processor, the processor may control the pump 113 such that the extruder is rotated at an rpm corresponding to the supply rate of the seasoning.

The seasoning introduction part 110 may include a seasoning switch 114 that may be manipulated by an operator. By using the seasoning switch 114, the operator may display whether provision of seasoning may begin or whether the application operation has been completed. The seasoning switch 114 may be disposed in a position, in which it may be controlled by a hand of the operator. Alternatively, for the convenience of the operator who performs the application operation with the hand, the seasoning switch 114 may be disposed in a position, at which it may be controlled with a leg, but the present disclosure is not limited thereto.

The seasoning introduction part 110 may include a supplementary switch that may be manipulated by the operator. By using the supplementary switch, the operator may display whether additional seasoning needs to be provided.

The seasoning introduction part 110 may further include a display 115. The display 115 is a part that displays information required by the operator. The display 115 may be configured as a device that display visual information, such as an LED or an LCD, but its type is not limited thereto. The display 115 may be electrically connected to the processor, and may receive information that is to be displayed from the processor in the form of electrical signals.

The display 115 may include a supply rate display member 115a that displays the supply rate of the seasoning. The display 115 may include a number-of-times display member 115a that may display the number of times, the seasoning has been dispensed, at a unit supply rate of the seasoning or the remaining number of times. The application rate may be displayed on the illustrated application rate display part, and the number of times, the seasoning has been discharged, may be displayed on a discharge number-of-times display unit.

As illustrated in FIG. 3, the display 115 may be disposed in a position that may be easily identified by the operator. As an example, the display 115 may be disposed on an upper side of the workbench 112.

### Seasoning Discharge Part 120

As illustrated in FIG. 2, the seasoning discharge part 120 may include a seasoning cylinder 121. The seasoning cylinder 121 may push the seasoning that has been pushed out by the two extruders of the pump 113 to the ingredient seated in an operation part. Due to the viscosity of the seasoning, the seasoning may not drop smoothly onto the ingredients by using only the own weight thereof. The seasoning cylinder 121 may push the seasoning pushed out in this way downward to discharge it smoothly. Accordingly, the seasoning cylinder 121 may be formed as a hydraulic cylinder that may be linearly moved along the upward/downward direction, but other means may be used as long as it may push the seasoning.

As illustrated in FIG. 3, the seasoning discharge part 120 may include a seasoning valve 122. The seasoning valve 122 is a part that determines whether to discharge the seasoning to the operation part, and may be located at a most distal end of a path, through which the seasoning flows, in the seasoning discharge part 120. The seasoning valve 122 may be a cutoff valve. Accordingly, the seasoning valve 122 may determine only whether to discharge the seasoning. However, the seasoning valve 122 may include a valve that may adjust an opening degree, and may ultimately determine a discharge rate of the seasoning. The seasoning valve 122 may have a downwardly opened shape. The seasoning valve 122 may be disposed in a position that is spaced upward apart from the workbench 112.

### Discharge/spreading/application Part 130

As illustrated in FIG. 2, the discharge/spreading/application part 130 may include a first pipeline member 131 and a compressor 132. The first pipeline member 131 may be connected to a lower end of the seasoning discharge part 120, and may extend downward.

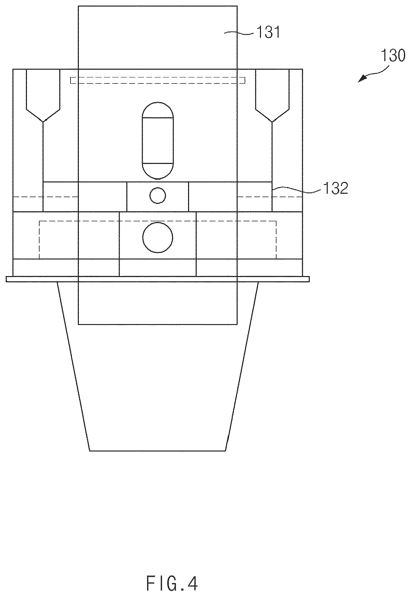

FIG. 4 is a view illustrating the first pipeline member and the compressor of the seasoning supply apparatus according to the first embodiment of the present disclosure. The compressor 132 may be configured to supply compressed air to an interior of the first pipeline member 131 and spread the seasoning through the compressed air. Diffusing the seasoning may be understood as a process of resolving seasoning clumps. In the process of the compressor 132 spraying the compressed air onto the seasoning, clumps of the seasoning have been resolved, and thus it may become easy to apply the seasoning to the raw material.

As illustrated in FIG. 2, the seasoning compressor 132 may include an air supply member 132a, an air purifying member 132b, a pressure control member 132c, and a valve member 132d. The air supply member 132a may supply the compressed air. The air purifying member 132b may purify the air that is discharged from the air supply member. The pressure control member 132c may control a pressure of the air that is discharged from the air purifying member. The valve member 132d may be configured to selectively discharge the air discharged from the pressure control member 132c.

### Vane 140

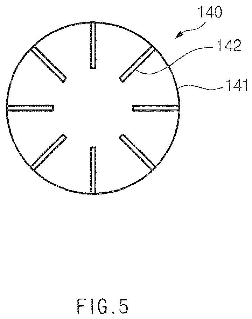

As illustrated in FIG. 2, the seasoning supply apparatus according to a first embodiment of seasoning the present disclosure may further include a vane 140. FIG. 5 is a view of an example of the vane of the seasoning supply apparatus according to the first embodiment of the present disclosure, viewed from a bottom.

As illustrated in FIG. 5, the vane 140 may include a vane body 141 and a blade 142. The vane body 141 may be connected to a lower distal end of the discharge/spreading/application part 130. The blade 142 may protrude inward from the vane body 141 to spread the clumps of seasoning that pass through the discharge/spreading/application part 130 and drop with own weights thereof.

As an example, the blade 142 may have a spiral area that extends upward. However, the present disclosure is not limited thereto, and the blade 142 may have various shapes as long as seasoning clumps may be spread.

Due to the blade 142 that protrudes toward an inside of the vane body 141, the seasoning that drops due to the own weight thereof receives a resistance, and in this process, the clumps of the seasoning are resolved whereby it may become easy to apply the seasoning to the raw material.

### <Second Embodiment>

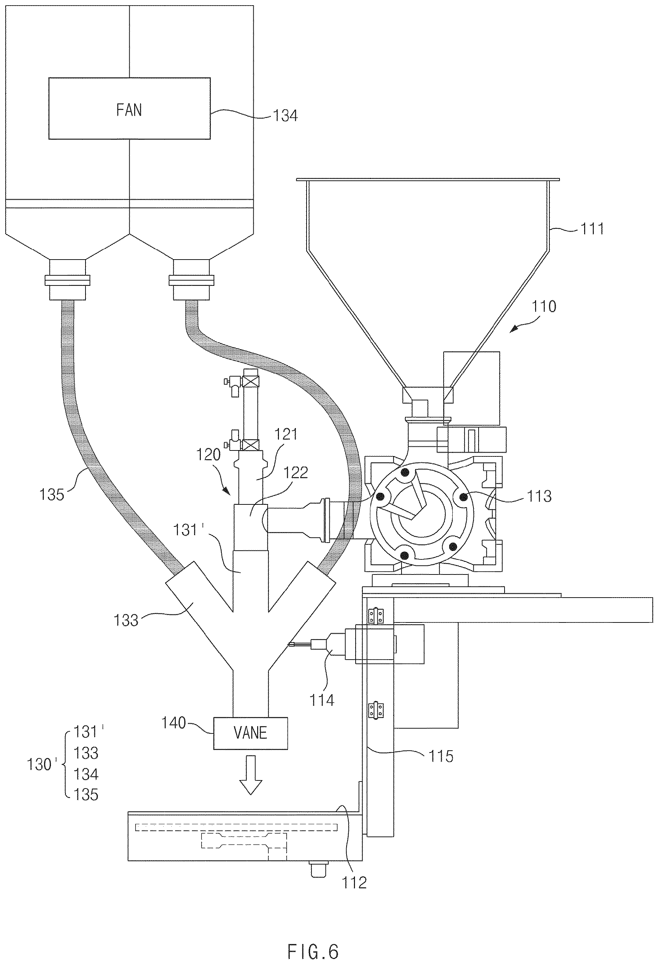

FIG. 6 is a conceptual view of a seasoning supply apparatus according to a second embodiment of the present disclosure. Hereinafter, the seasoning supply apparatus according to the second embodiment of the present disclosure will be described with reference to FIG. 6. The seasoning supply apparatus according to the second embodiment is different from the seasoning supply apparatus according to the first embodiment in a shape of a discharge/spreading/application part 130'. Configurations that are the same as or equivalent to those of the seasoning supply apparatus according to the first embodiment are assigned the same or equivalent reference numerals, and a detailed description thereof will be omitted.

The discharge/spreading/application part 130' of the seasoning supply apparatus according to the second embodiment of the present disclosure may include a second pipeline member 133 and a fan 134. A lower end of the second pipeline member 133 may be connected to a first pipeline member 131', and may extend in a direction that is inclined with respect to a downward direction. The fan 134 may be connected to an upper end of the second pipeline member 133, and may be configured to supply the air into the seasoning discharge part 120 to press the seasoning downward. The fan 134 may include a rotary blade and a motor for rotating the rotary blade.

As an example, a pair of second pipeline members 133 may be provided, and may extend in different directions each other. Furthermore, a pair of fans 134 may be provided, and may be connected to upper distal ends of the pair of second pipeline members 133, respectively. However, the numbers of the second pipeline members 133 and the fans 134 is not limited to the pairs, and various modifications, such as three or four, may be possible.

The discharge/spreading/application part 130' may further include a hose member 135. The hose member 135 may connect the second pipeline member 133 and the fan 134. The number of the hose members 135 may be modified, for example, two or three may be provided.

According to the seasoning supply apparatus according to the second embodiment of the present disclosure, because the air may be supplied through the fan 134 to press the seasoning downward, the seasoning may be smoothly discharged and a density of the seasoning may also be lowered. whereby it may become easy to apply the seasoning to the raw material.

### <Seasoning Applying Apparatus>

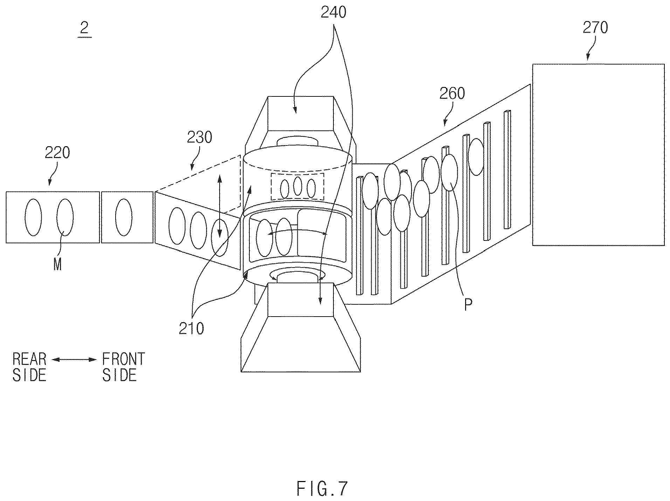

Hereinafter, the seasoning applying apparatus according to the present disclosure will be described in detail with reference to the drawings. FIG. 7 is a conceptual view of the seasoning applying apparatus according to an embodiment of the present disclosure.

Referring to FIG. 7, a seasoning applying apparatus 2 according to an embodiment of the present disclosure includes an introduction part 230, an agitator 210 that agitates the seasoning and the semi-finished product "M" and applies the seasoning to the semi-finished product "M" to manufacture the product "P", and a driver 240 that rotates the agitator 210. Furthermore, the seasoning applying apparatus 2 may include a discharge part 250.

### Division Part 220

The seasoning applying apparatus 2 according to an embodiment of the present disclosure may include a division part 220. The division part 220 is a part that transfers the semi-finished product "M" from a rear side to a front side of the introduction part 230 to transfer individual semi-finished products "M" to the introduction part 230. The division part 220 may include a conveyor belt that extends forward, and may transfer the semi-finished product "M" delivered from the seasoning supply apparatus 2 forward while the semi-finished product "M" is seated on an upper surface thereof. For the division part 220 to separate the semi-finished products "M" and deliver them to the introduction part 230, a speed, at which the division part 220 is driven, may be higher than that of the discharge part 250 of the seasoning supply apparatus 2. The division part 220 may transfer the semi-finished product "M" along the front side at a faster speed than the speed, at which the semi-finished product "M" is delivered, to increase an interval between the semi-finished products "M" whereby the semi-finished products "M" may be separated as individually as possible.

### Introduction Part 230

The introduction part 230 moves the semi-finished products "M" forward and selectively delivers them to the agitator 210, which will be described later. The introduction part 230 may deliver the semi-finished product "M" to the agitator 210.

The introduction part 230 may be a swing conveyor. The swing conveyor is an apparatus that transfers a seated object along an extension direction, and may control a direction it faces.

The introduction part 230 may be located at a rear end thereof, and may be rotated about an imaginary line that extends in an upward/downward direction. However, in the case of the imaginary line, which is a rotation axis of the introduction part 230, as long as a location of a front end of the introduction part 230 may be moved leftward and rightward according to rotation of the introduction part 230, it may also extend along a different direction.

The introduction part 230 may have a shape that is inclined upward with respect to a front side. Accordingly, the semi-finished product "M" seated in the introduction part 230 may be lifted while being moving forward.

### Discharge Part 250

The seasoning applying apparatus 2 according to an embodiment of the present disclosure may include a discharge part 250. The discharge part 250 moves the product "P" discharged from the agitator 210 forward and provides it to the workbench 260. The discharge part 250 may include a conveyor belt that extends forward, and may transfer the semi-finished product "M" forward with the semi-finished product "M" being seated on an upper surface thereof.

A rear end of the discharge part 250 may be located on a lower side of the agitator 210. The rear end of the discharge part 250 may extend forward, and may be formed perpendicular to the upward/downward direction. An intermediate portion of the discharge part 250 may have a shape that is inclined upward with respect to a forward direction. A front end of the discharge part 250 may be connected to the workbench 260, to deliver the product "P" to the workbench 260. The workbench 260, which configured such that the operator may complete the seasoning application operation for the product "P", may be located on an upper side of the rear end of the discharge part 250. The discharge part 250 has the above-described form, and may allow the workbench 260 to be positioned at a height that is suitable for the operator to perform work, and the discharge part 250 may the product "P" to the workbench 260.

The discharge part 250 may include a plurality of discharge steps. The discharge step may extend in the leftward/rightward direction at a specific interval along the forward/rearward direction, and may be formed to protrude from a surface of the discharge part 250. The discharge step may be a stop step at an intermediate portion of the discharge part 250, which has an upward rightward shape, to ensure that the product "P" is stably transferred forward and upward without rolling down in a reverse direction due to the own weight thereof. A structure that is similar to the discharge step may also be formed in the introduction part 230.

### Processor

The seasoning applying apparatus 2 according to an embodiment of the present disclosure may include a processor for control. The processor may be electrically connected to other components that constitute the seasoning applying apparatus 2, and may transmit control signals or receive data in the form of electrical signals.

The processor generates and transmits control signals that control each component. A micro controller unit (MCU), a central processing unit (CPU), a field programmable gate array (FPGA), an application specific integrated circuit (ASIC), and the like may be used as processors, but the types thereof are not limited thereto.

Control commands performed by the processor may be stored and utilized in a storage medium, and the storage medium may be a device, such as a hard disk drive (HDD), a solid state drive (SSD), a server, a volatile medium, or a non-volatile medium, but the types are not limited thereto. Furthermore, data required by the processor to perform tasks may be stored in the storage medium. The processor may control an overall product "P" production process by the seasoning applying apparatus 2.

In the above, even though all the components constituting the embodiment of the present disclosure have been described as being combined or operated in combination, the present disclosure is not necessarily limited to this embodiment. That is, as long as it is within the scope of the purpose of the present disclosure, all of the components may be operated by selectively combining one or more of them. In addition, terms such as "include," "comprise," or "have" described above mean that the corresponding component may be present, unless specifically stated to the contrary, and thus do not exclude other components. Rather, it should be interpreted as being able to include other components. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

The above description is a simple exemplary description of the technical spirits of the present disclosure, and an ordinary person in the art, to which the present disclosure pertains, may make various corrections and modifications without departing from the essential characteristics of the present disclosure. Therefore, the embodiments disclosed in the present disclosure are not for limiting the technical spirits of the present disclosure but for describing them, and the scope of the technical spirits of the present disclosure is not limited by the embodiments. The protection scope of the present disclosure should be construed by the following claims, and all the technical spirits in the equivalent range should be construed as being included in the scope of the present disclosure.

## Claims

1. A seasoning supply apparatus comprising:
a seasoning introduction part configured to introduce seasoning;
a seasoning discharge part connected to the seasoning introduction part, extending downward, and configured such that the seasoning introduced by the seasoning introduction part drops downward and is discharged; and
a discharge/spreading/application part connected to a lower side of the seasoning discharge part, and configured to assist discharge of the seasoning through the seasoning discharge part.

2. The seasoning supply apparatus of claim 1, wherein the discharge/spreading/application part includes:
a first pipeline member connected to a lower end of the seasoning discharge part, and extending downward; and
a compressor configured to spread the seasoning with compressed air by supplying the compressed air to an interior of the first pipeline member.

3. The seasoning supply apparatus of claim 2, wherein the compressor includes:
an air supply member configured to supply the compressed air;
an air purifying member configured to purify air discharged from the air supply member;
a pressure control member configured to control a pressure of the air discharged from the air supply member; and
a valve member configured to selectively discharge the air discharged from the pressure control member.

4. The seasoning supply apparatus of claim 1, wherein the discharge/spreading/application part includes:
a first pipeline member connected to a lower end of the seasoning discharge part, and extending downward;
a second pipeline, a lower end of which is connected to the first pipeline member, and extending in a direction being inclined a downward direction; and
a fan connected to an upper end of the second pipeline member, and configured to press the seasoning downward by supplying air into an interior of the seasoning discharge part.

5. The seasoning supply apparatus of claim 4, wherein the discharge/spreading/application part further includes:
a hose member connecting the second pipeline member and the fan.

6. The seasoning supply apparatus of claim 4, wherein a pair of second pipeline members are configured to extend in different directions each other, and
wherein a pair of fans are provided, and are connected to upper distal ends of the pair of second pipeline members, respectively.

7. The seasoning supply apparatus of claim 1, further comprising:
a vane including:
a vane body connected to a lower distal end of the discharge/spreading/application part; and
a blade protruding toward an inside of the vane body to spread the clumped seasoning passing through the discharge/spreading/application part and dropping by an own weight thereof.

8. The seasoning supply apparatus of claim 1, wherein the discharge/spreading/application part includes:
a branched pipeline member extending downward, and divided into multiple branches to extend.

9. The seasoning supply apparatus of claim 1, wherein the discharge/spreading/application part includes:
a nozzle member connected to a lower distal end of the discharge/spreading/application part, opened downward, having an area, an opened width of which decreases as it goes to a center thereof.

10. An edible product production system comprising:
a seasoning supply apparatus configured to form a semi-finished product by supplying seasoning to a raw material; and
a seasoning applying apparatus configured to form a product by applying the seasoning to the semi-finished product,
wherein the seasoning supply apparatus includes:
a seasoning discharge part connected to a seasoning introduction part configured to introduce the seasoning, and extending downward, and configured to discharge the seasoning toward the raw material by dropping the seasoning downward; and
a discharge/spreading/application part connected to the seasoning discharge part, and configured to assist discharge of the seasoning through the seasoning discharge part.
